# EUROPEAN PATENT SPECIFICATION

(11) **EP 1 599 115 B1**
(45) Date of publication and mention of the grant of the patent: **04.04.2007**
(21) Application number: 04705484.6
(22) Date of filing: 27.01.2004
(51) Int. Cl.: A47J 9/00

(54) **ROTISSERIE APPARATUS**
BRATVORRICHTUNG
ACCESSOIRE POUR LA GRILLADE

(30) Priority: 27.01.2003 US 442662 P
(43) Date of publication of application: 30.11.2005
(73) Proprietor: Everlasting Glory Ltd, Wanchai, Hong Kong (CN)
(72) Inventor: DOTAN, Simon, 42651 Netanya (IL)
(74) Representative: Miles, John Stephen
(86) International application number: PCT/IL2004/000076
(87) International publication number: WO 2004/066796

(56) References cited:
- US-A- 4 150 610
- US-A- 5 819 639
- US-A- 5 832 811
- US-A- 5 837 980

## Description

### Field of the Invention

This invention relates to a rotisserie apparatus for roasting food articles such as chicken bodies and the like. The apparatus may be used in combination with indoor ovens or grilling devices of any conventional type or for outdoor grilling.

### Background of the Invention

A rotisserie is a well known device for rotating food articles, such as chicken bodies, adjacent to a heat source to ensure that a food article may be cooked at a substantially uniform temperature. The outer surface of a food article is exposed to the high temperature of a conventional oven, e.g. 250°C, and heat is conducted from the outer surface of the food article to relatively colder interior portions thereof. The food article is rotated at a sufficiently slow speed of approximately 5 rpm to prevent overexposure and eventual parching of a region of its outer surface, while ensuring that the food article, and particularly its inner portions, continues to cook. At this rotational speed, some fat that drips from the food article being grilled does not fall to the ground or onto a drip pan, but rather adheres to the food article during the grilling thereof, resulting in a food article saturated with grease. Depending on the thickness, the cooking time of a food article in a rotisserie is an hour or more.

Many rotisseries are described in the art. They are generally complete appliances comprising heating means, which cannot be used with conventional ovens, as would be desirable. Generally, they do not permit heat radiation to be transmitted from the bottom, as in outdoor grilling appliances. They do not offer a choice between a horizontal or a vertical disposition of the food article to be cooked. They are generally relatively complicated and expensive.

For example, USP 5,575,196 discloses a grilling appliance including a vertical impaling member of thermally conductive material, mounted vertically within a grilling compartment for impaling a food article to be grilled; a rotary drive for rotating the vertical impaling member about a vertical axis; a heater located within the vertical impaling member for heating the interior of the food article to be grilled; and a heater located laterally of the vertically impaling member for heating the exterior of the food article to be grilled. This apparatus is a self-contained unit and cannot be used in conventional ovens or in outdoor grilling appliances.

USP 5,907,994 discloses a grilling appliance including a grilling compartment, an impaling member mounted within the grilling compartment, and a circular array of electrical heaters surrounding the impaling member for heating the food article impaled thereon. The impaling member is not rotatable, and therefore the electrical heaters are sequentially energized to produce a rotating heating front. This apparatus can only grill food in a vertical position and is not compatible with a conventional oven or an outdoor grilling appliance.

USP 5,819,639 discloses a rotisserie apparatus which comprises a horizontal spit, which is configured to extend between, and to be supported by, two supports, and a rotation apparatus for rotating the spit including a spit holding mechanism for fixedly holding an end of the spit and a manually wound spring mechanism configured to rotate the spit holding mechanism. The spring mechanism is exposed to the high temperature of a conventional oven, e.g. 250°C, and is liable to succumb over the course of time to excessive thermal expansion, wear, fatigue, and even mechanical failure.

It is therefore an object of this invention to provide a rotisserie apparatus which has the following features:
it can be used in conjunction with a conventional oven of any kind or any outdoor grilling appliances;
its drive mechanism is not exposed to a high-temperature heat source, and therefore mechanical failure is mitigated;
food articles may be roasted in a horizontal position or in a vertical position;
food articles may be roasted in such a way that dripping fat or grease does not adhere thereto, resulting in better grease reduction and consequently, for healthier roasting;
the cooking time for food articles is significantly reduced relative to prior art devices;
it is easy to operate;
it is structurally and functionally simple and inexpensive;
it may be easily disassembled, facilitating easy storage; and
it is relatively light, facilitating introduction to, and removal from, a heat source, as well as facilitating transportation thereof to an outdoor grilling site.

Other objects and advantages of the invention will become apparent as the description proceeds.

### Summary of the Invention

The present invention provides a rotisserie apparatus that comprises a skewer assembly with a stationary portion and a rotatable portion, at least one side wall for supporting the stationary portion, and at least one base element for supporting the side wall, a casing enclosing the rotatable portion being driven by a mechanically powered drive mechanism, such as a spring motor, housed in the interior of the casing.

The rotisserie apparatus may further comprise a second side wall for rotatingly supporting the rotatable portion, and a second base element for supporting the second side wall.

The spring motor may be arranged such that the spring is wound upon rotation of the rotatable portion in one rotational direction, the rotatable portion being rotatable in the other rotational direction at a substantially uniform speed regulated by a speed reducer and an escapement mechanism upon release of the spring. The rotatable portion may be rotatably mounted onto the stationary portion by means of an adaptor and rotatable upon release of the spring at a speed range of approximately 0.1 to 1.0 rpm. The rotatable portion may also be rotatable upon release of the spring at a speed of 0.5 rpm.

The apparatus may also be suitable for roasting within a conventional oven or for outdoor grilling, for roasting when the skewer assembly is in a horizontal disposition or in a vertical disposition, such that it is transportable from one heat source to another.

The stationary and rotatable portions may be cylindrical, the outer diameter of the rotatable portion being slightly larger than that of the stationary portion.

The rotisserie apparatus may further comprise an extension which terminates with a pointed element that coincides with the longitudinal axis of the skewer assembly, for impaling a food article. The outer end of the rotatable portion is provided with a cylindrical element. The cylindrical element may coincide with the longitudinal axis of the skewer assembly.

Each side wall may be formed with a slot, such that the open portion of the slot is removed from an edge of the side wall.

The rotisserie apparatus may further comprise means of securing the stationary portion to the corresponding slot, such as a key which is press fitted into the slot.

The rotisserie apparatus according to claim 18 wherein the key is rectilinear.

The rotisserie apparatus according to claim 19, wherein the key has a H-shaped cross section.

The rotisserie apparatus according to claim 1 or 2, further comprising legs which extend from one edge of the corresponding side wall to the corresponding base element.

The rotisserie apparatus according to claim 21, wherein the legs are detachably connected to the corresponding base element.

The rotisserie apparatus according to claim 22, wherein the base element is U-shaped.

The rotisserie apparatus according to claim 1, wherein the rotatable portion is provided with a sealing element for preventing infiltration of dripping fat from a food article into the drive mechanism.

The rotisserie apparatus may further comprise at least one heat absorbing plate detachably connected to the skewer assembly, where each of the heat absorbing plates is suitable for absorbing heat from an infrared heat source and conducting heat to the skewer assembly. Each heat absorbing plate, such as a circular plate, may be connected to the skewer assembly by means of threads formed on the conical extension or on the cylindrical element. The transversal length of each heat absorbing plate may be substantially equal to that of the closest side wall.

The rotisserie apparatus may further compris a crank element detachably connected to the cylindrical element, for rewinding the spring motor while a food article impaled bv the skewer assembly is being roasted.

The rotatable portion may be rotatable in cantilevered fashion.

The rotisserie apparatus may further comprise means for retaining a food article onto the rotatable portion. The retaining means may be a disc which is ratchedly engageable with serrations formed on an extension to the rotatable portion.

### Brief Description of the Drawings

In the drawings:
- Fig. 1 is a perspective view of a rotisserie apparatus, according to one embodiment of the invention;
- Fig. 2 is a schematic plan view of a chicken carcass being roasted by the apparatus of the invention;
- Fig. 3 is a perspective view of a stationary portion of the skewer assembly, showing a rectilinear key;
- Fig. 4 is a side view of the apparatus of the invention, showing the securement of the stationary portion to a side wall slot by means of the rectilinear key;
- Fig. 5 is a perspective view of a stationary portion of the skewer assembly, showing threads which are formed on the conical extension thereof;
- Fig. 6 is a side view of the apparatus, according to another embodiment of the invention, showing a heat absorbing plate in close proximity to a side wall;
- Fig. 7 is a plan view of the apparatus of Fig. 6, schematically illustrating the improved heat transfer to the skewer assembly provided by a heat absorbing plate;
- Fig. 8 is a perspective view of the skewer assembly, as the rotatable portion is rotatably mounted on the stationary portion;
- Fig. 9 illustrates a perspective view of an exemplary drive mechanism suitable for the apparatus of the invention;
- Fig. 10 is a plan view of the apparatus, showing a crank element for rewinding the rotatable portion;
- Fig. 11 is a front view of a side wall, according to another embodiment of the invention;
- Fig. 12 is a perspective view of yet another embodiment of the invention; and
- Fig. 13 is an enlarged perspective view of a H-shaped key according to the embodiment of Fig. 12.

### Detailed Description of Preferred Embodiments

The present invention is a novel rotisserie apparatus wherein the drive mechanism is housed within a skewer assembly, so that the drive mechanism may be exposed to the least possible amount of heat, thereby increasing its longevity. Due to its configuration, the apparatus conducts an increased amount of heat to a food article being roasted, resulting in a significantly reduced cooking time relative to prior art rotisseries.

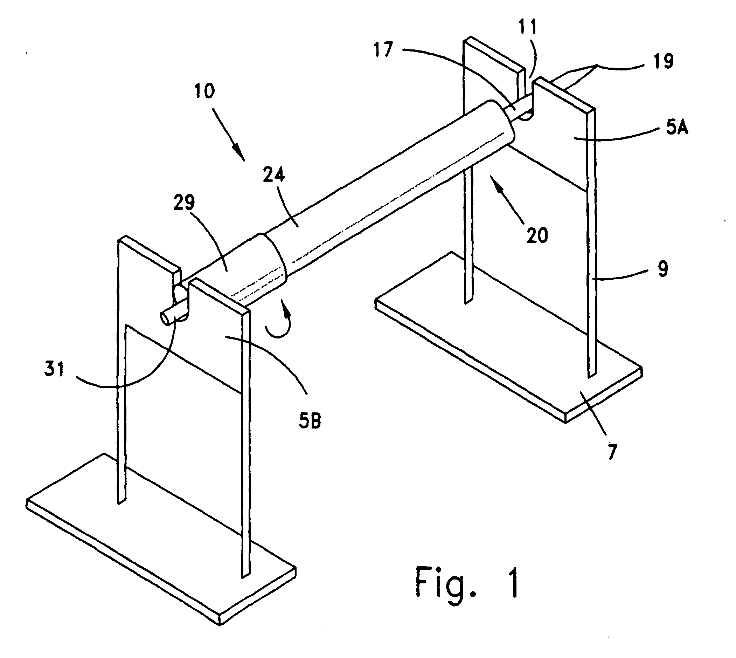

Fig. 1 illustrates one embodiment of the rotisserie apparatus according to the present invention, generally indicated by numeral 10. Rotisserie apparatus 10 comprises a horizontally disposed skewer assembly generally indicated by numeral 20, slotted side walls 5A and 5B for supporting each longitudinal end of the skewer assembly, respectively, and bases 7 each supporting a corresponding side wall 5. Skewer assembly 20 is generally cylindrical, and is provided with an extension 17 at one longitudinal end thereof which terminates with pointed element 19 for impaling a food article to be roasted by the apparatus. Skewer assembly 20 is also provided with a preferably cylindrical element 31 which protrudes from the other longitudinal end thereof. Side walls 5A and 5B are preferably of limited height, being cut slightly below the curved portion of corresponding semi-elliptical slot 11, so as to reduce weight of the rotisserie apparatus. Legs 9 extend from the bottom of the corresponding side wall to corresponding base 7, and are preferably detachably connected to the latter, so that the apparatus may be compactly stored when not in use.

Rotisserie apparatus 10 is suitable for roasting within a conventional oven wherein the heat source is above and below the apparatus or for outdoor grilling wherein the heat source is below the apparatus, and may be easily transported from one heat source to another. After the use of the apparatus, the components thereof may be disassembled and cleaned.

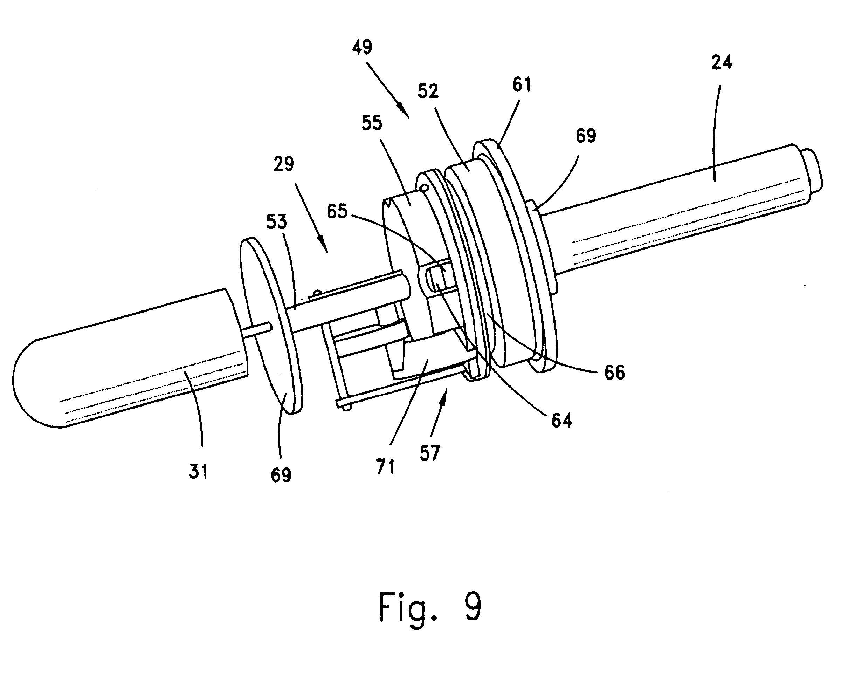

More particularly, skewer assembly 20 comprises, along its length, a stationary cylindrical portion 24 and a rotatable cylindrical portion 29, in which a spring loaded wind mechanism is housed. Rotatable portion 29 has a slightly larger outer diameter than stationary portion 24, and is provided with sealing element 61 (Fig. 9) for preventing infiltration of dripping fat from a food article into the drive mechanism. Rotatable portion 29 is concentric with respect to stationary portion 24, in order to ensure proper balancing while rotating.

The drive mechanism is arranged such that rotatable portion 29 may be wound in only one rotational direction. Before impaling a food article, rotatable portion 29 is accordingly coupled with stationary portion 24 and rotated in the direction shown by the arrow in Fig. 1, in order to store energy in the spring. After the spring is wound, a locking element (not shown), well known to those skilled in the art, is then set, to prevent the unwinding of rotatable portion 29 prior to the securement of skewer assembly 20 with respect to the side walls. After the food article is impaled by pointed element 19, stationary portion 24 is secured to, and consequently prevented from being rotated with respect to, side wall 5A. Cylindrical element 31 is then lowered into slot 11 of side wall 5B. Upon release of the locking element, rotatable portion 29. together with cylindrical element 31, begins to slowly rotate in a direction opposite to that of the illustrated arrow by means of the potential energy stored in the spring of the drive mechanism. Cylindrical element 31 may be rotatingly supported by a bearing (not shown), which is retainable on cylindrical element 31 and therefore insertable within slot 11 following removal of skewer assembly from the side walls, after the food article is completely roasted.

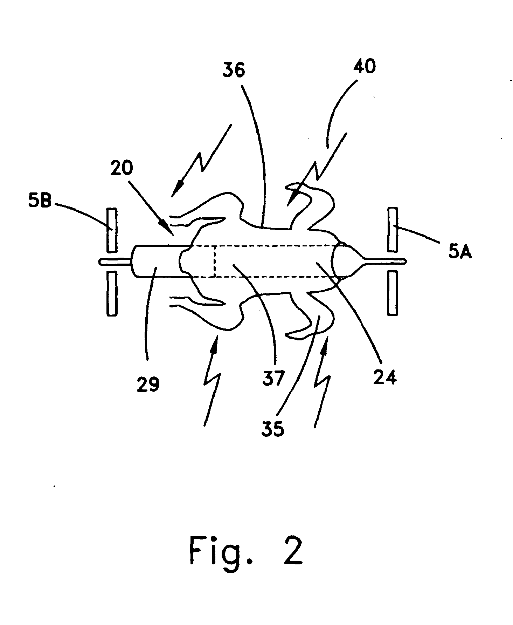

Fig. 2 schematically illustrates the roasting of chicken 35, through which skewer assembly 20 penetrates, by means of the apparatus of the present invention. While conical extension 17 of stationary portion 24 is secured to side wall 5A and cylindrical element 31 of rotatable portion 29 is rotating within the corresponding slot, chicken 35 is being roasted by the application of radiant heat from an infrared source, as schematically indicated at 40. Rotatable portion 29 slowly rotates, e.g. at a speed of approximately 0.1-1.0 rpm, and preferably at a rate of 0.5 rpm. At such a rotational rate, heat transfer by means of radiation is predominant, and the chicken is therefore roasted with crispiness not noticeable in chicken that is cooked by prior art rotisseries at a rotational rate of approximately 5 rpm. The Applicant has surprisingly measured that a chicken may be fully cooked by the rotisserie apparatus of the present invention within 45 minutes, in contrast to over an hour in a prior art apparatus, due to the increased heat transmission to it by radiation. Furthermore, at such a rotational rate the fat that drips from the food article being roasted may be collected in a drip pan and does not adhere to the food article during rotation thereof, as in the prior art.

As the chicken is being roasted by infrared heat source 40, outer surface 36 is exposed to the maximum temperature of the heat source and may reach a temperature of approximately 250°C. Due to the relatively low conductivity of chicken, the temperature of inner portions 37 of the chicken, which the Applicant has measured, is only 110°C. The spring motor of the drive mechanism is advantageously housed within rotatable portion 29. at the coldest temperature of the rotisserie apparatus upon exposure to a heat source, to prolong the longevity of the drive mechanism by avoiding excessive thermal expansion, fatigue, and mechanical failure, which are characteristic of prior art rotisseries.

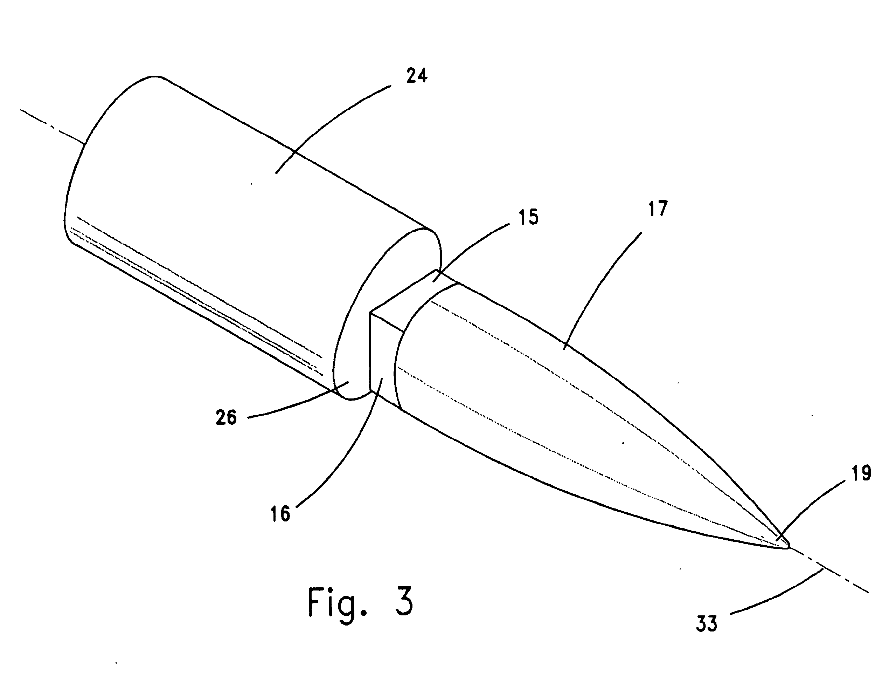

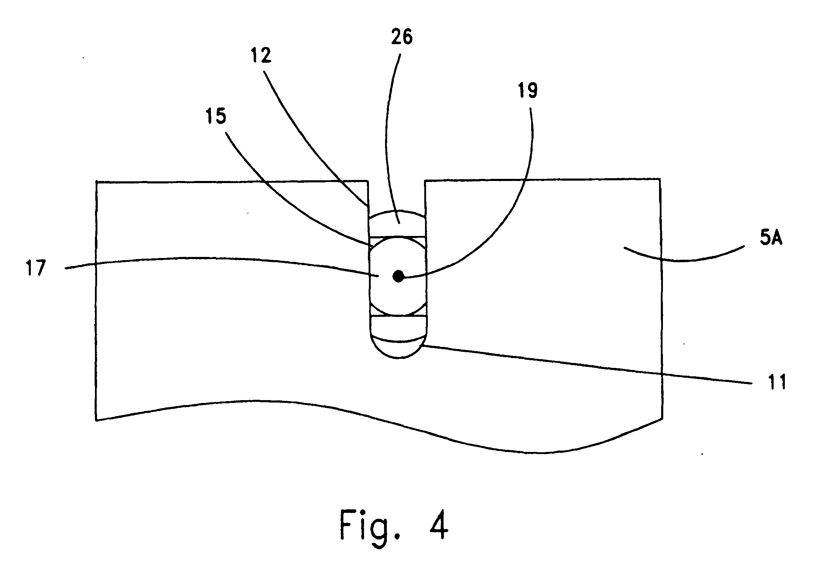

Figs. 3 and 4 illustrate exemplary means by which stationary portion 24 is secured to slot 11 of side wall 5A. Cylindrical stationary portion 24 terminates at its outer end, i.e. the end closest to a side wall, with planar face 26, which is perpendicular to longitudinal axis 33 of the skewer assembly. Face 26 is formed with rectilinear key 15, which longitudinally protrudes therefrom. Conical extension 17 tapers from key 15 and terminates with pointed element 19. Key 15 is adapted to be secured to slot 11 by a press fit, with sides 16 of the key contacting corresponding parallel edges 12 of the slot. After a food article is roasted, according the satisfaction of a user, the skewer assembly is raised and key 15 is detached from slot 11. It will be appreciated that any other detachable securement means well known to those skilled in the art may be employed to secure stationary portion 24 to the corresponding side wall 5.

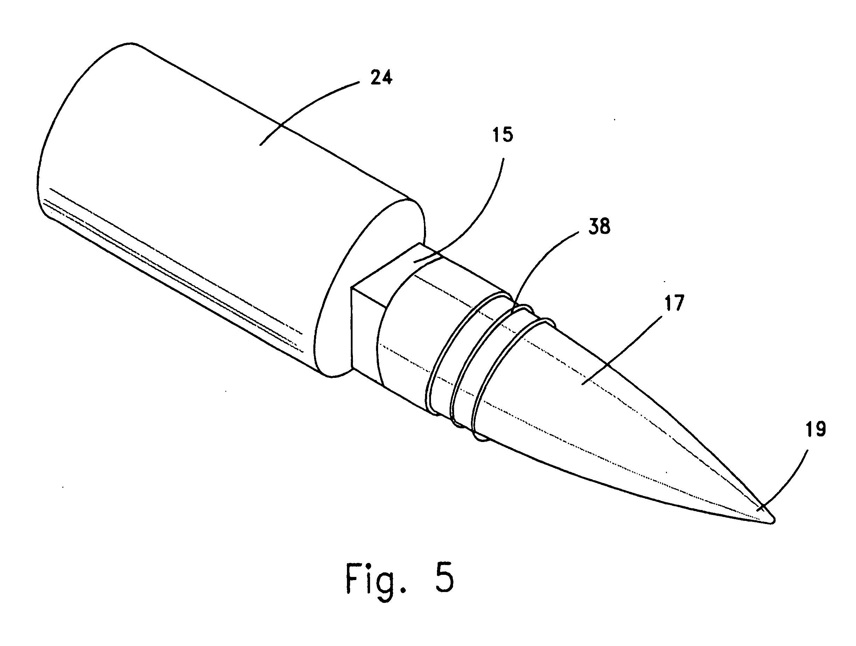

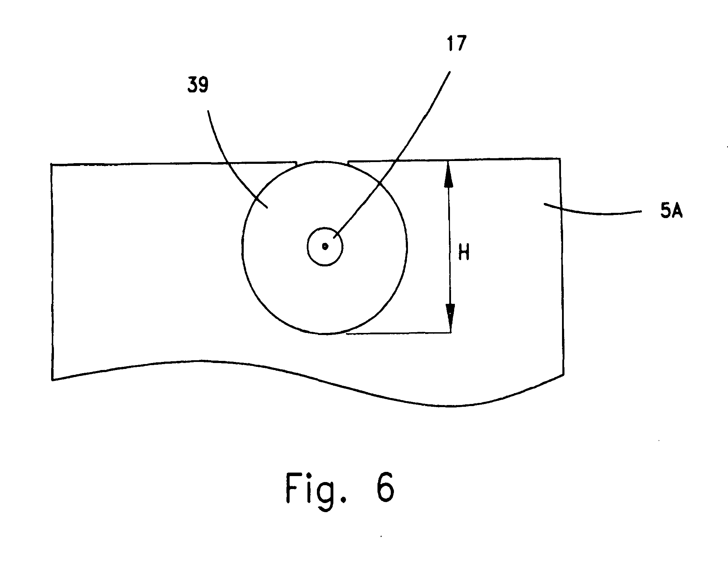

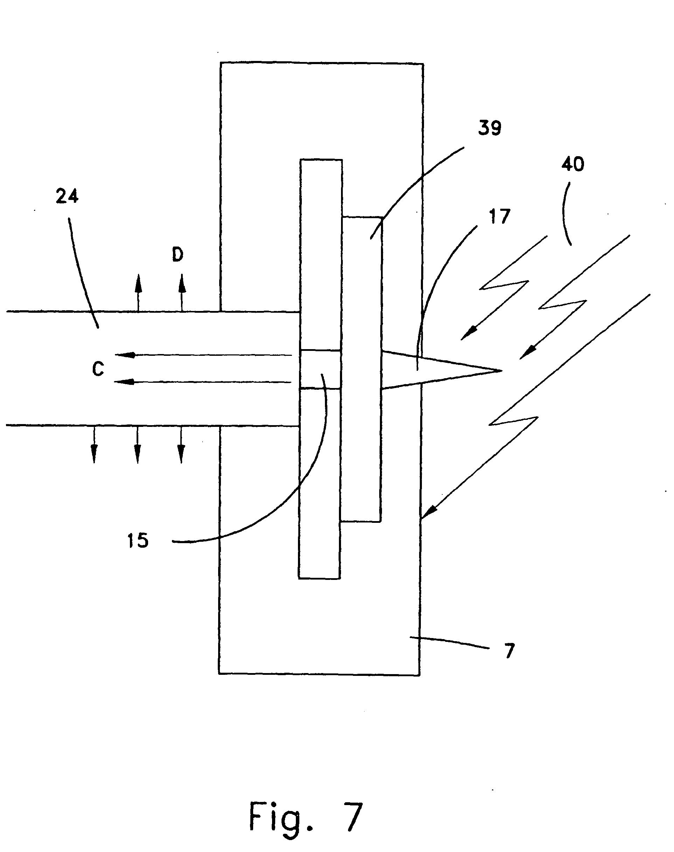

In one preferred embodiment of the invention, as illustrated in Figs. 5-7, conical extension 17 of stationary portion 24 is formed with threads 38, between key 15 and pointed element 19. Heat absorbing plate 39, which is preferably circular as shown, having a large surface area, e.g. its height H is approximately equal to that of side wall 5A, is engageable with threads 38 by complementary internal threads (not shown). Heat absorbing plate 39 is preferably made of material such as aluminum having high thermal conductivity, low weight and is stable under exposure to a high temperature heat source that is suitable for roasting. Heat absorbing plate 39 has a thickness such that it contacts rectilinear key 15 when engaged to its fullest extent by threads 38, and therefore conducts heat C, as represented by the large arrows in Fig. 7, to the key and then to stationary portion 24 when the plate is exposed to infrared heat source 40. Stationary portion 24 in turn conducts heat D, as represented by the small arrows, to a food article (not shown) carried by the skewer assembly. Consequently, heat absorbing plate 39 serves as a means for increasing heat transfer to interior portions of a food article, which normally remain at a significantly lower temperature in prior art rotisseries than that of its outer surfaces, and therefore require a relatively long cooking time of at least one hour for a chicken carcass. A heat absorbing plate may be attached to the cylindrical element of the rotatable portion in a similar fashion. The Applicant measured the cooking time for a chicken with the rotisserie of the present invention, and surprisingly revealed that the cooking time was only 25 minutes.

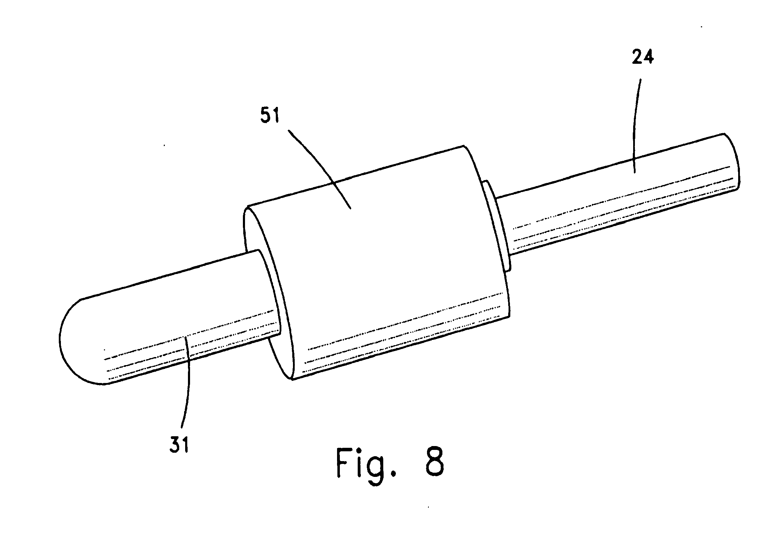

Figs. 8 and 9 illustrate an exemplary drive mechanism that is suitable for driving rotatable portion 29 at a sufficiently slow rotational speed of 0.1-1.0 rpm. As can be readily seen, the drive mechanism has a compact arrangement and is housed in casing 51 of rotatable portion 29 having a slightly larger outer diameter than that of stationary portion 24. The drive mechanism is a spring motor generally indicated by numeral 49. Spring motor 49 comprises compartment 52 which retains a spring (not shown) wound or unwound about a shaft (not shown) which is rotatably supported by compartment 52, cylindrical ratchet element 64 with circumferentially spaced sawtooth serrations and mounted at the end of axially displaceable rod 53, gear engaging element 66 mounted on the shaft, housing 55 connected to large gear 65 with a central opening through which ratchet element 64 rotatably extends and having a plurality of additional openings, and escapement mechanism 57.

The spring is attached at one end to a clip (not shown) mounted to the shaft and at another end to compartment 52. Compartment 52 and housing 55 in turn are fixedly connected to casing 51, which is rotatably mountable onto stationary portion 24 by means of adaptor 69. Gear engaging element 66 is provided with a toothed element (not shown) which is engageable with ratchet element 64. When the spring is to be wound, cylindrical element 31 is pushed until contacting abutment plate 69, whereupon rod 53 is axially displaced until ratchet element 64 engages the complementary toothed element of gear engaging element 66. The serrations of the two toothed elements, that is, of ratchet element 64 and of gear engaging element 66, are configured such that rotation of rotatable portion 29 is possible in only one rotational direction. Furthermore during axial displacement of rod 53, at least one additional opening of large gear 65 accommodates a sloping projection (not shown) formed on gear engaging element 66. As well known to those skilled in the art, the sloping projections allow gear engaging element 66 to rotate with respect to large gear 65 when cylindrical element is rotated and the spring is being wound, but secure element 66 to large gear 65 after the winding operation is completed. A locking element (not shown) retains the spring in a wound configuration, and when released, the spring may transmit the power stored therein to large gear 65. As large gear 65 is rotated, housing 55 and casing 51 rotate as well. The rotational speed of the shaft is reduced to a constant speed ranging from 0.1-1.0 rpm by means of escapement mechanism 57, as well known to those skilled in the art. Bevel gear 71 of the escapement mechanism is in engagement with large gear 65, and when the latter is driven by the spring and gear engaging element 66, escapement mechanism 57 is actuated.

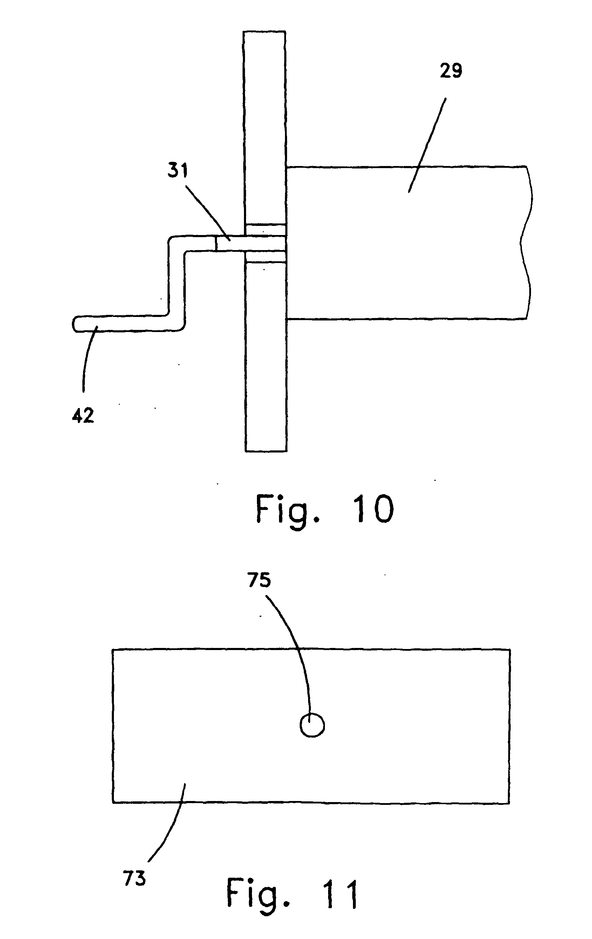

Rotatable portion 29 is configured to rotate for a period of time corresponding to the maximum cooking time for most food articles. However, for some food articles, such as turkey, the cooking time is greater than the total rotational time which the rotatable portion is afforded. Fig. 10 illustrates an embodiment of the invention, by which the spring motor may be rewound when a food article is being roasted and cylindrical element 31 cannot be rotated, due to the dripped slippery fat that has adhered thereto. As shown, crank 42 is attachable to cylindrical element 31, e.g. by means of threading. Crank 42 facilitates winding of the spring in one rotational direction and is rotated in the other rotational direction when the spring power is being released.

It will be appreciated that the rotisserie apparatus of the present invention may be employed for the roasting of food articles that rotate about a vertical axis. A base accessory (not shown) having two horizontally extending slots, for receiving each of the side walls in a horizontal disposition, may be deployed. For this embodiment, as shown in Fig. 11, a rectangular side wall 73 may be used, without any need for legs, which is bored with an aperture 75 sized to accommodate the conical extension of the stationary portion or the cylindrical element of the rotatable portion. When aperture 75 is circular, the key for securing the conical extension to the corresponding side wall is also circular. At first the top side wall is inserted into the base accessory, then the conical extension is inserted into the corresponding aperture, after which the bottom side wall is inserted into the base accessory while the cylindrical element is received in the corresponding aperture.

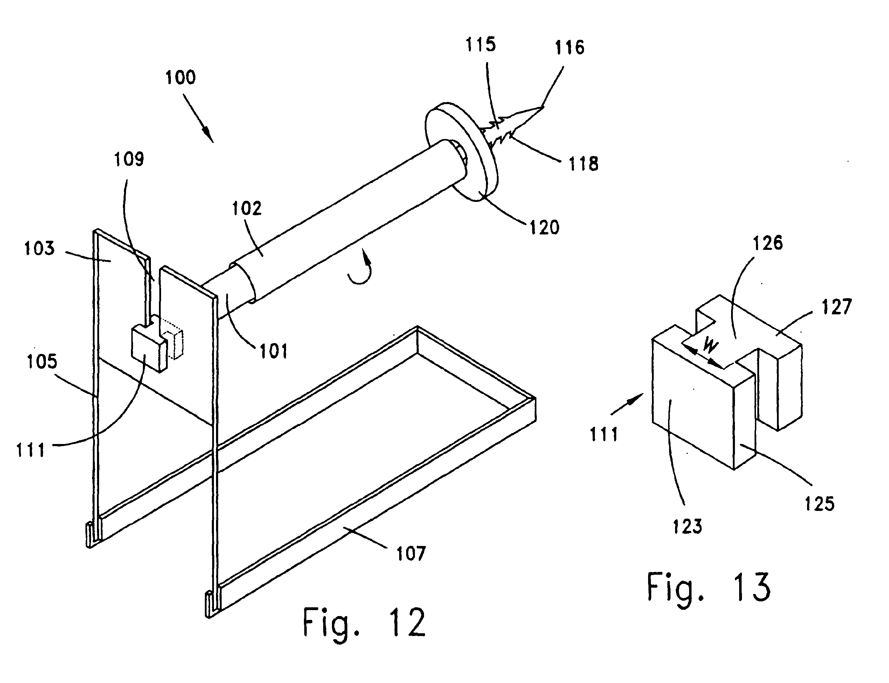

Figs. 12 and 13 illustrate another embodiment of the invention, wherein apparatus 100 comprises stationary portion 101, rotatable portion 102 which is rotatably mounted on stationary portion 101, single side wall 103 having legs 105 which are removably attachable to U-shaped base 107, and disc 120 for retaining a food article on rotatable portion 102 as it is being roasted. Stationary portion 101 and rotatable portion 102 are cylindrical, coaxial and horizontally disposed. Rectilinear key 111 formed on the inner end of stationary portion 101 is used to secure the latter to rectangular slot 109, such that the rotatable portion is rotatable in cantilevered fashion. It will be appreciated that a skewer assembly with a portion that is rotatable in catilevered fashion is advantageous in that food articles may be easily impaled and roasted without having to detach the rotatable portion from the stationary portion.

Extension 115 having pointed element 116 coincident with the longitudinal axis of the skewer assembly protrudes from the outer end of rotatable portion 102. Conical extension 115 is formed with a series of longitudinally separated toothed serrations 118 formed on the periphery thereof. Annular disc 120 is also formed with toothed serrations, which are complementary to those of the conical extension, along the inner periphery of the disc. Axial displacement of disc 120 toward side wall 103 moves the serrations of the disc in mating alignment with serrations 118 of the conical extension. As the disc is further axially displaced, intermittent engaging and disengaging of the serrations results in a ratcheting action. When a food article is impaled by rotatable portion 102, the disc may be axially displaced until it is in pressing engagement with the food article, whereupon the latter is retained by the disc in unslippable fashion.

Key 111 has a H-shaped cross section with rectangular ends 123 at the longitudinal end thereof and is recessed at sides 125, thereby forming thin connecting member 126 between two wide rectangular elements 127. The width W of connecting member 126 is substantially equal to the width of rectangular slot 109, to thereby provide secured engagement between connecting member 126 and slot 109. Opposed wide rectangular elements 127 are adapted to prevent release of the key from slot 109 when a moment is applied to rotatable portion 102. When such a moment is applied, a wide rectangular element 127 contacts side wall 103, thereby retaining the key in slot 109. Wide rectangular elements 127 are also advantageously used for easy removal of key 111 from slot 109.

Apparatus 100 may also be employed for deployment of the skewer assembly in a vertical disposition, e.g. when side wall 103 is placed on a grill rack.

While some embodiments of the invention have been described by way of illustration, it will be apparent that the invention can be carried into practice with many modifications, variations and adaptations, and with the use of numerous equivalents or alternative solutions that are within the scope of the invention as defined in the appended claims.

## Claims

1. A rotisserie apparatus (10), comprising a skewer assembly (20) having a stationary portion (24) and a rotatable portion (29) at least one side wall (5A, 5B) for supporting said stationary portion and at least one base element (7) for supporting said side wall, a casing (51) enclosing said rotatable portion being driven by a mechanically powered drive mechanism housed in the interior of the casing.

2. The rotisserie apparatus according to claim 1, further comprising a second side wall for rotatingly supporting the rotatable portion, and a second base element for supporting said second side wall.

3. The rotisserie apparatus according to claim 1, wherein the drive mechanism comprises a spring motor.

4. The rotisserie apparatus according to claim 3, wherein the spring motor is arranged such that the spring is wound upon rotation of the rotatable portion in one rotational direction, the rotatable portion being rotatable in the other rotational direction at a substantially uniform speed regulated by a speed reducer and an escapement mechanism upon release of the spring.

5. The rotisserie apparatus according to claim 1, wherein the rotatable portion is rotatably mounted onto the stationary portion by means of an adaptor.

6. The rotisserie apparatus according to claim 3, wherein the rotatable portion is rotatable upon release of the spring at a speed range of approximately 0.1 to 1.0 rpm.

7. The rotisserie apparatus according to claim 6, wherein the rotatable portion is rotatable upon release of the spring at a speed of 0.5 rpm.

8. The rotisserie apparatus according to claim 1, wherein the apparatus is suitable for roasting within a conventional oven or for outdoor grilling.

9. The rotisserie apparatus according to claim 1, wherein the apparatus is suitable for roasting when the skewer assembly is in a horizontal disposition or in a vertical disposition.

10. The rotisserie apparatus according to claim 1, wherein the apparatus is transportable from one heat source to another.

11. The rotisserie apparatus according to claim 1, wherein the stationary and rotatable portions are cylindrical, the outer diameter of the rotatable portion being slightly larger than that of the stationary portion.

12. The rotisserie apparatus according to claim 1, further comprising an extension which terminates with a pointed element for impaling a food article.

13. The rotisserie apparatus according to claim 12, wherein the pointed element coincides with the longitudinal axis of the skewer assembly.

14. The rotisserie apparatus according to claim 1, wherein the outer end of the rotatable portion is provided with a cylindrical element.

15. The rotisserie apparatus according to claim 14, wherein the cylindrical element coincides with the longitudinal axis of the skewer assembly.

16. The rotisserie apparatus according to claim 1 or 2, wherein each side wall is formed with a slot, the open portion of said slot being removed from an edge of the side wall.

17. The rotisserie apparatus according to claim 16, further comprising means of securing the stationary portion to the corresponding slot.

18. The rotisserie apparatus according to claim 17, wherein the securing means is a key which is press fitted into the slot.

19. The rotisserie apparatus according to claim 18, wherein the key is rectilinear.

20. The rotisserie apparatus according to claim 19, wherein the key has a H-shaped cross section.

21. The rotisserie apparatus according to claim 1 or 2, further comprising legs which extend from one edge of the corresponding side wall to the corresponding base element.

22. The rotisserie apparatus according to claim 21, wherein the legs are detachably connected to the corresponding base element.

23. The rotisserie apparatus according to claim 22, wherein the base element is U-shaped.

24. The rotisserie apparatus according to claim 1, wherein the rotatable portion is provided with a sealing element for preventing infiltration of dripping fat from a food article into the drive mechanism.

25. The rotisserie apparatus according to claim 12 or 14, further comprising at least one heat absorbing plate detachably connected to the skewer assembly, each of said heat absorbing plates suitable for absorbing heat from an infrared heat source and conducting heat to the skewer assembly.

26. The rotisserie apparatus according to claim 25, wherein each heat absorbing plate is connected to the skewer assembly by means of threads formed on the conical extension or on the cylindrical element.

27. The rotisserie apparatus according to claim 25, wherein the transversal length of each heat absorbing plate is substantially equal to that of the closest side wall.

28. The rotisserie apparatus according to claim 25, wherein each heat absorbing plate is circular.

29. The rotisserie apparatus according to claim 14, further comprising a crank element detachably connected to the cylindrical element, for rewinding the spring motor while a food article impaled by the skewer assembly is being roasted.

30. The rotisserie apparatus according to claim 1, wherein the rotatable portion is rotatable in cantilevered fashion.

31. The rotisserie apparatus according to claim 30, further comprising means for retaining a food article onto the rotatable portion.

32. The rotisserie apparatus according to claim 31, wherein the retaining means is a disc which is ratchedly engageable with serrations formed on an extension to the rotatable portion.

## Patentansprüche

1. Eine Grillvorrichtung (10) mit einer Spießanordnung (20) mit einem stationären Abschnitt (24) und einem drehbaren Abschnitt (29), sowie mit mindestens einer Seitenwand (5A,5B) zum Haltern des stationären Abschnitts, und mindestens einem Basiselement (7) zum Haltern der Seitenwand, wobei ein Gehäuse (51) den drehbaren Abschnitt umschließt, welcher durch einen mechanisch angetriebenen Antriebsmechanismus angetrieben ist, der im Inneren des Gehäuses untergebracht ist.

2. Die Grillvorrichtung gemäß Anspruch 1, ferner mit einer zweiten Seitenwand zum drehenden Haltern des drehbaren Abschnitts und mit einem zweiten Basiselement zum Haltern der zweiten Seitenwand.

3. Die Grillvorrichtung gemäß Anspruch 1, wobei der Antriebsmechanismus einen Federmotor umfasst.

4. Die Grillvorrichtung gemäß Anspruch 3, wobei der Federmotor so angeordnet ist, dass die Feder bei Drehung des drehbaren Abschnitts in einer Drehrichtung aufgewickelt wird, wobei der drehbare Abschnitt in der anderen Drehrichtung beim Freigeben der Feder mit einer im wesentlichen gleichförmigen Geschwindigkeit gedreht wird, welche durch einen Geschwindigkeitsreduzierer und einen Hemmungsmechanismus geregelt wird.

5. Die Grillvorrichtung gemäß Anspruch 1, wobei der drehbare Abschnitt mittels eines Adapters drehbar an dem stationären Abschnitt angebracht ist.

6. Die Grillvorrichtung gemäß Anspruch 3, wobei der drehbare Abschnitt beim Freigeben der Feder in einem Geschwindigkeitsbereich von etwa 0,1 bis 1,0 U.p.m. drehbar ist.

7. Die Grillvorrichtung gemäß Anspruch 6, wobei der drehbare Abschnitt beim Freigeben der Feder mit einer Geschwindigkeit von 0,5 U.p.m. drehbar ist.

8. Die Grillvorrichtung gemäß Anspruch 1, wobei die Vorrichtung zum Rösten bzw. Braten innerhalb eines herkömmlichen Ofens oder zum Grillen im Freien geeignet ist.

9. Die Grillvorrichtung gemäß Anspruch 1, wobei die Vorrichtung zum Rösten bzw. Braten geeignet ist, wenn die Spießanordnung in einer horizontalen Anordnung oder einer vertikalen Anordnung ist.

10. Die Grillvorrichtung gemäß Anspruch 1, wobei die Vorrichtung von einer Wärmequelle zu einer anderen transportabel ist.

11. Die Grillvorrichtung gemäß Anspruch 1, wobei die stationären und drehbaren Abschnitte zylindrisch sind, wobei der Außendurchmesser des drehbaren Abschnitts geringfügig größer ist als der des stationären Abschnitts.

12. Die Grillvorrichtung gemäß Anspruch 1, ferner mit einer Erweiterung, die in einem zugespitzten Element zum Aufspießen eines Lebensmittelgegenstandes endet.

13. Die Grillvorrichtung gemäß Anspruch 12, wobei das zugespitzte Element mit der Längsachse der Spießanordnung koinzidiert.

14. Die Grillvorrichtung gemäß Anspruch 1, wobei das äußere Ende des drehbaren Abschnitts mit einem zylindrischen Element versehen ist.

15. Die Grillvorrichtung gemäß Anspruch 14, wobei das zylindrische Element mit der Längsachse der Spießanordnung koinzidiert.

16. Die Grillvorrichtung gemäß Anspruch 1 oder 2, wobei jede Seitenwand mit einem Schlitz versehen ist, wobei der offene Abschnitt des Schlitzes von einem Rand der Seitenwand ausgenommen ist.

17. Die Grillvorrichtung gemäß Anspruch 16, ferner mit Mitteln zum Sichern des stationären Abschnitts an dem entsprechenden Schlitz.

18. Die Grillvorrichtung gemäß Anspruch 17, wobei das Sicherungsmittel ein Schlüssel bzw. eine Passfeder ist, die in den Schlitz durch Drücken eingesetzt ist.

19. Die Grillvorrichtung gemäß Anspruch 18, wobei der Schlüssel bzw. die Passfeder geradlinig ist.

20. Die Grillvorrichtung gemäß Anspruch 19, wobei der Schlüssel bzw. die Passfeder einen H-förmigen Querschnitt besitzt.

21. Die Grillvorrichtung gemäß Anspruch 1 oder 2, ferner mit Beinen, die sich von einem Rand der entsprechenden Seitenwand zu dem entsprechenden Basiselement erstrecken.

22. Die Grillvorrichtung gemäß Anspruch 21, wobei die Beine lösbar mit dem entsprechenden Basiselement verbunden sind.

23. Die Grillvorrichtung gemäß Anspruch 22, wobei das Basiselement U-förmig ist.

24. Die Grillvorrichtung gemäß Anspruch 1, wobei der drehbare Abschnitt mit einem Dichtungselement versehen ist, um ein Eindringen von tropfendem Fett von einem Lebensmittelgegenstand in den Antriebsmechanismus zu verhindern.

25. Die Grillvorrichtung gemäß Anspruch 12 oder 14, ferner mit mindestens einer wärmeabsorbierenden Platte, die lösbar mit der Spießanordnung verbunden ist, wobei jede der wärmeabsorbierenden Platten geeignet ist, Wärme von einer Infrarotwärmequelle zu absorbieren und Wärme zu der Spießanordnung zu leiten.

26. Die Grillvorrichtung gemäß Anspruch 25, wobei jede wärmeabsorbierende Platte mit der Spießanordnung mittels Gewinde verbunden ist, die auf der konischen Erweiterung oder auf dem zylindrischen Element ausgebildet sind.

27. Die Grillvorrichtung gemäß Anspruch 25, wobei die Transversallänge jeder wärmeabsorbierenden Platte im Wesentlichen gleich der der nächstliegenden Seitenwand ist.

28. Die Grillvorrichtung gemäß Anspruch 25, wobei jede wärmeabsorbierende Platte kreisförmig ist.

29. Die Grillvorrichtung gemäß Anspruch 14, ferner mit einem Kurbelelement, das lösbar mit dem zylindrischen Element verbunden ist, um den Federmotor zurückzudrehen, während ein mit der Grillanordnung aufgespießter Lebensmittelgegenstand geröstet wird.

30. Die Grillanordnung gemäß Anspruch 1, wobei der drehbare Abschnitt in einer auskragenden Art und Weise drehbar ist.

31. Die Grill vorrichtung gemäß Anspruch 30, ferner mit Mitteln zum Rückhalten eines Lebensmittelgegenstands auf dem drehbaren Abschnitt.

32. Die Grillvorrichtung gemäß Anspruch 31, wobei das Rückhaltemittel eine Scheibe ist, die rastend mit auf einer Erweiterung des drehbaren Abschnitts ausgebildeten Zähnen in Eingriff bringbar ist.

## Revendications

1. Appareil de rôtissage (10) comprenant un ensemble formant broche (20) ayant une partie fixe (24) et une partie rotative (29), au moins une paroi latérale (5A, 5B) pour supporter ladite partie fixe et au moins un élément de base (7) pour supporter ladite paroi latérale, un boîtier (51) enfermant ladite partie rotative est entraîné par un mécanisme d'entraînement actionné de manière mécanique logé à l'intérieur du boîtier.

2. Appareil de rôtissage selon la revendication 1, comprenant en outre une seconde paroi latérale pour supporter de manière rotative la partie rotative et un second élément de base pour supporter ladite seconde paroi latérale.

3. Appareil de rôtissage selon la revendication 1, dans lequel le mécanisme d'entraînement comprend un moteur à ressort.

4. Appareil de rôtissage selon la revendication 3, dans lequel le moteur à ressort est agencé de sorte que le ressort est enroulé suite à la rotation de la partie rotative dans une direction de rotation, la partie rotative pouvant tourner dans l'autre direction de rotation à une vitesse sensiblement uniforme régulée par un réducteur de vitesse et un mécanisme d'échappement suite à la libération du ressort.

5. Appareil de rôtissage selon la revendication 1, dans lequel la partie rotative est montée de manière rotative sur la partie fixe au moyen d'un adaptateur.

6. Appareil de rôtissage selon la revendication 3, dans lequel la partie rotative tourne suite à la libération du ressort à une vitesse approximativement de l'ordre de 0,1 à 1,0 tour par minute.

7. Appareil de rôtissage selon la revendication 6, dans lequel la partie rotative peut tourner suite à la libération du ressort à une vitesse de 0,5 tours par minute.

8. Appareil de rôtissage selon la revendication 1, dans lequel l'appareil est approprié pour rôtir à l'intérieur d'un four classique ou pour les grillades en plein air.

9. Appareil de rôtissage selon la revendication 1, dans lequel l'appareil est approprié pour rôtir lorsque l'ensemble formant broche est dans une position horizontale ou dans une position verticale.

10. Appareil de rôtissage selon la revendication 1, dans lequel l'appareil peut être transporté d'une source de chaleur à une autre.

11. Appareil de rôtissage selon la revendication 1, dans lequel les parties fixe et rotative sont cylindriques, le diamètre externe de la partie rotative étant légèrement supérieur à celui de la partie fixe.

12. Appareil de rôtissage selon la revendication 1, comprenant en outre une extension qui se termine par un élément pointu pour embrocher un article alimentaire.

13. Appareil de rôtissage selon la revendication 12, dans lequel l'élément pointu coïncide avec l'axe longitudinal de l'ensemble formant broche.

14. Appareil de rôtissage selon la revendication. 1, dans lequel l'extrémité externe de la partie rotative est prévue avec un élément cylindrique.

15. Appareil de rôtissage selon la revendication 14, dans lequel l'élément cylindrique coïncide avec l'axe longitudinal de l'ensemble formant broche.

16. Appareil de rôtissage selon la revendication 1 ou 2, dans lequel chaque paroi latérale est formée avec une fente, la partie ouverte de ladite fente étant retirée d'un bord de la paroi latérale.

17. Appareil de rôtissage selon la revendication 16, comprenant en outre des moyens pour fixer la partie fixe dans la fente correspondante.

18. Appareil de rôtissage selon la revendication 17, dans lequel les moyens de fixation sont une clé qui est montée à la presse dans la fente.

19. Appareil de rôtissage selon la revendication 18, dans lequel la clé est rectiligne.

20. Appareil de rôtissage selon la revendication 19, dans lequel la clé a une section transversale en forme de H.

21. Appareil de rôtissage selon la revendication 1 ou 2, comprenant en outre des pattes qui s'étendent à partir d'un bord de la paroi latérale correspondante jusqu'à l'élément de base correspondant.

22. Appareil de rôtissage selon la revendication 21, dans lequel les pattes sont raccordées de manière détachable à l'élément de base correspondant.

23. Appareil de rôtissage selon la revendication 22, dans lequel l'élément de base est en forme de U.

24. Appareil de rôtissage selon la revendication 1, dans lequel la partie rotative est prévue avec un élément d'étanchéité pour empêcher l'infiltration de graisse qui s'égoutte d'un article alimentaire dans le mécanisme d'entraînement.

25. Appareil de rôtissage selon la revendication 12 ou 14, comprenant en outre au moins une plaque d'absorption de chaleur raccordée de manière détachable à l'ensemble formant broche, chacune desdites plaques d'absorption de chaleur étant appropriée pour absorber la chaleur provenant d'une source de chaleur infrarouge et d'une chaleur de conduction vers l'ensemble formant broche.

26. Appareil de rôtissage selon la revendication 25, dans lequel chaque plaque d'absorption de chaleur est raccordée à l'ensemble formant broche au moyen de filetages formés sur l'extension conique ou sur l'élément cylindrique.

27. Appareil de rôtissage selon la revendication 25, dans lequel la longueur transversale de chaque plaque d'absorption de chaleur est sensiblement égale à celle de la paroi latérale la plus proche.

28. Appareil de rôtissage selon la revendication 25, dans lequel chaque plaque d'absorption de chaleur est circulaire.

29. Appareil de rôtissage selon la revendication 14, comprenant en outre un élément de manivelle raccordé de manière détachable à l'élément cylindrique pour ré-enrouler le moteur à ressort alors qu'un article alimentaire embroché par l'ensemble formant broche est en train de rôtir.

30. Appareil de rôtissage selon la revendication 1, dans lequel la partie rotative peut tourner d'une manière en porte à faux.

31. Appareil de rôtissage selon la revendication 30, comprenant en outre des moyens pour retenir un article alimentaire sur la partie rotative.

32. Appareil de rôtissage selon la revendication 31, dans lequel les moyens de retenue sont un disque qui peut être mis en prise par encliquetage avec des dentelures formées sur une extension de la partie rotative.
